# EUROPÄISCHE PATENTANMELDUNG

(11) **EP 2 636 386 A1**
(43) Veröffentlichungstag der Anmeldung: **11.09.2013**
(21) Anmeldenummer: 12158609.3
(22) Anmeldetag: 08.03.2012
(51) Int. Cl.: A61C 8/00, A61C 13/265, A61C 5/00

(54) **Vorrichtungen und Verfahren zur Verbindung einer dentalen Prothesenkonstruktion mit einem Kieferknochen**

(71) Anmelder: Fischler, Titus, 4314 Zeiningen (CH)
(72) Erfinder: Fischler, Titus, 4314 Zeiningen (CH)
(74) Vertreter: Latscha, Silvan

(57) **Zusammenfassung**

Eine Abutmentabdeckung (1) für ein Abutment (2) zur Verbindung einer dentalen Prothesenkonstruktion mit einem Kieferknochen, umfasst: ein Kopfende (11) und eine dem Kopfende (11) entgegengesetzte Befestigungsstruktur (12). Dabei ist die Befestigungsstruktur (12) dazu ausgestaltet, dass die Abutmentabdeckung (1) an einer Öffnung (22) des Abutments (2) auf dem Abutment (2) befestigbar ist, so dass die Öffnung (2) des Abutments (2) im Wesentlichen vollständig von der Abutmentabdeckung (1) abgedeckt ist. Das Kopfende (11) weist einen der Befestigungsstruktur (12) abgewandten konvex gekrümmten Frontabschnitt (111) auf. Das Kopfende (11) ist dabei im Wesentlichen vollständig geschlossen ausgestaltet. Die erfindungsgemäße Abutmentabdeckung (1) ermöglicht, dass die Prothesenkonstruktion verhältnismäßig leicht und effizient über eine Patrize einer Druckknopfverbindung im Mund eines Patienten eingesetzt beziehungsweise zentriert werden kann und dass eine verhältnismäßig gute Hygiene gewährleistet werden kann.

## Beschreibung

### Technisches Gebiet

Die Erfindung betrifft eine Abutmentabdeckung, eine Abutmentanordnung und ein Verfahren, die zur Verbindung einer dentalen Prothesenkonstruktion mit einem Kieferknochen eingesetzt werden können.

### Stand der Technik

In der Zahnmedizin werden heute regelmäßig beschädigte beziehungsweise kranke Zähne durch einen künstlichen Zahnersatz ersetzt. Dabei werden häufig Implantate als Zahnwurzelersatz in einen Kieferknochen eines Patienten eingepflanzt. Auf das Implantat wird dann typischerweise ein Abutment aufgesetzt, wobei das Abutment an seinem dem Implantat abgewandten Längsende mit einer Verbindungsstruktur ausgestaltet ist, an der eine Prothesen23.15konstruktion montiert werden kann. In einer verbreiteten Ausführung ist diese Verbindung zwischen Abutment und Prothesenstruktur als Druckknopfverbindung ausgestaltet, wobei typischerweise ein männliches Teil der Druckknopfverbindung also die Patrize am Abutment ausgestaltet ist und ein weibliches Teil der Druckknopfverbindung also die Matrize mit der Prothesenkonstruktion verbunden ist.

In der WO 2010/025034 A1 ist beispielsweise eine dentale Verankerungsvorrichtung beschrieben, die ein Abutment beziehungsweise ein Implantat mit einem Patrizenkopt umfasst sowie ein Matrizengehäuse einer Matrize, das mit der Prothesenkonstruktion fest verbunden wird. Die Matrize umfasst weiter einen Retentionseinsatz, der in das Matrizengehäuse eingesetzt wird, bevor die Matrize zusammen mit der Prothesenkonstruktion auf den Patrizenkopf aufgeschnappt wird. Der Patrizenkopf weist ein flaches Kopfende und eine konvex nach außen gekrümmte Außenfläche als Einschnappfläche auf. Im flachen Kopfende ist eine Öffnung mit einem Innenprofil in den Patrizenkopf eingelassen, durch die einerseits ein Schraubwerkzeug zum Schrauben des Abutments beziehungsweise des Implantats angreifen kann und andererseits ein Stempel beziehungsweise Stopfen des Retentionseinsatzes klemmen kann.

Ein anderes solches Druckknopfverbindungssystem ist in der WO 2011/027229 A2 beschrieben. Dabei ist insbesondere die Matrize unter anderem so weitergebildet, dass der Retentionseinsatz über einen Verriegelungsmechanismus fest mit dem Matrizengehäuse verbunden ist, wenn die Matrize auf die Patrize aufgeschnappt ist. Eine Öffnung in der Patrize insbesondere von einem Kopfende her ist bei diesem Druckknopfverbindungssystem nicht notwendig.

Weiter ist in der WO 2011/027230 A2 ein Abutment mit einer solchen Druckknopfverbindung beschrieben. Das Abutment ist individuell auf die Gegebenheiten seiner vorgesehenen Verwendung angepasst und weist einen gekrümmten beziehungsweise geknickten Körperabschnitt auf. Das Abutment weist eine im Wesentlichen hohlzylindrische Öffnung auf, die sich durch den Körperabschnitt hindurch erstreckt. Da der Körperabschnitt geknickt beziehungsweise gekrümmt ausgestaltet ist, ist der Rand der Öffnung auf einer Seite verhältnismäßig nahe am Rand eines Einschnappabschnitts der Druckknopfverbindung angeordnet. Zudem ist die Öffnung relativ zur Fläche des Kopfendes durch die geknickte beziehungsweise gebogene Ausgestaltung auch verhältnismäßig groß.

In Anwendung der bekannten Druckknopferbindungssysteme kann bei der Befestigung der Prothesenkonstruktion mit dem Abutment beziehungsweise dem Implantat ein Problem darin bestehen, dass auf Grund des flachen Kopfendes des Patrizenkopfs nur eingeschränkt eine sanfte Zentrierung der Matrize über der Patrize erfolgen kann. Beispielsweise kann die Kante zwischen dem flachen Kopfende beziehungsweise der Öffnung und der konvex gekrümmten Außenseite des Patrizenkopfs beim Aufdrücken der Matrize auf die Patrize zu einer Beschädigung der Matrize und insbesondere eines Randes des Retentionseinsatzes führen, was diverse Probleme nach sich ziehen kann. Zudem kann das flache Kopfende der Patrize vor allem bei stark atrophierten Kiefertopographien für den Benutzer zu Problemen führen, insbesondere bei der korrekten Platzierung beziehungsweise Zentrierung des abnehmbaren Zahnersatzes.

Weiter ist es bei vielen herkömmlichen Druckknopfverbindungssystemen von Bedeutung, dass ein Schraubwerkzeug zur Montage des Abutments am Implantat möglichst von außen her am beziehungsweise im beziehungsweise durch das Kopfende des Abutments so ansetzen kann, dass die Außenfläche des Einschnappabschnitts nicht beeinträchtigt wird, wozu bekanntermaßen die Öffnung am Kopfende der Patrize vorgesehen ist. Insbesondere können mit einer solchen Öffnung Angriffsflächen für ein Schraubwerkzeug bereit gestellt werden oder eine Implantatschraube kann hindurch geführt werden, ohne dass die Höhe des Abutments beziehungsweise der Patrize beeinflusst wird. Diese Öffnung kann jedoch unter anderem aus hygienischen Gründen nachteilig sein, da sich in ihr unerwünschte Ablagerungen festsetzten können. Zudem erhöhen solche Öffnungen die Gefahr, dass die Matrize beim Aufdrücken auf die Patrize beschädigt wird. Insbesondere bei einer wie oben beschriebenen geknickten beziehungsweise gekrümmten Ausführung des Abutments sind diese Öffnungen verhältnismäßig groß, so dass die erwähnten Probleme da besonders ausgeprägt auftreten können.

Aufgabe der nachfolgenden Erfindung ist es daher, ein geeignetes System beziehungsweise Teile davon vorzuschlagen, das ein schonendes, effizientes und hygienisches Verbinden einer Prothesenkonstruktion mit einem Kieferknochen ermöglichen.

### Darstellung der Erfindung

Die Aufgabe wird erfindungsgemäß durch eine Abutmentabdeckung gelöst, wie sie im unabhängigen Anspruch 1 definiert ist sowie durch eine Abutmentanordnung, wie sie im unabhängigen Anspruch 12 definiert ist, und ein Verfahren, wie es im unabhängigen Anspruch 15 definiert ist. Vorteilhafte Ausführungsvarianten der Erfindung ergeben sich aus den abhängigen Ansprüchen.

Das Wesen der Erfindung besteht im Folgenden: Eine Abutmentabdeckung für ein Abutment zur Verbindung einer dentalen Prothesenkonstruktion mit einem Kieferknochen umfasst ein Kopfende und eine dem Kopfende entgegengesetzte Befestigungsstruktur. Die Befestigungsstruktur ist dabei dazu ausgestaltet, dass die Abutmentabdeckung an einer Öffnung des Abutments auf dem Abutment befestigbar ist, so dass die Öffnung des Abutments im Wesentlichen vollständig von der Abutmentabdeckung abgedeckt ist. Das Kopfende weist einen der Befestigungsstruktur abgewandten konvex gekrümmten Frontabschnitt auf. Das Kopfende ist zudem im Wesentlichen vollständig geschlossen ausgestaltet. In Bezug auf den Frontabschnitt kann sich der Begriff "der Befestigungsstruktur abgewandt" darauf beziehen, dass der Frontabschnitt der Befestigungsstruktur entgegengesetzt ausgerichtet ist. Wenn sich also beispielsweise die Befestigungsstruktur an einem unteren Ende der Abutmentabdeckung angeordnet ist, befindet sich der Frontabschnitt ein einem entgegengesetzten oberen Ende der Abutmentabdeckung.

In Anwendung der Abutmentabdeckung kann der konvex gekrümmte Frontabschnitt des Kopfendes ein okklusales beziehungsweise koronales Ende der Abutmentabdeckung bilden, und er kann auch danach benannt werden. Analog dazu kann die Befestigungsstruktur ein apikales Ende oder ein Ende in Richtung des Abutments bilden. Von der Befestigungsstruktur aus in Richtung Kopfende kann sich eine Längsachse der Abutmentabdeckung zentral durch die Abutmentabdeckung erstrecken. Das Kopfende kann rotationssymmetrisch ausgestaltet sein, wobei eine zugehörige Rotationsachse identisch mit der Längsachse der Abutmentabdeckung sein kann. Eine radiale Achse kann dabei rechtwinklig von der Rotationsachse abstehen. Die Abutmentabdeckung ist mit Vorteil einstückig beziehungsweise einteilig ausgestaltet.

Unter dem Begriff "Abutment" wird im Zusammenhang mit der vorliegenden Erfindung eine Verbindungskonstruktion beziehungsweise ein Verbindungsstück beziehungsweise ein Pfosten verstanden, die beziehungsweise das beziehungsweise der Mittel aufweist, über die eine Prothesenkonstruktion befestigt werden kann, so dass bei bestimmungsgemäßem Einsatz des Abutments die Prothesenkonstruktion über das Abutment in einem Mund eines Patienten am Kieferknochen montiert werden kann. Solche Abutments können aus unterschiedlichen geeigneten Materialien hergestellt sein, wobei heute beispielsweise Titan oder Zirkonoxid eingesetzt werden. Dabei kann das Abutment als einteilige Konstruktion mit einem Implantatkörper versehen sein, über den es direkt mit einem Kieferknochen des Patienten verbunden werden kann. Beispielsweise kann dabei der Implantatkörper ein Außengewinde aufweisen, über welches das Abutment in den Kieferknochen eingeschraubt und eingepflanzt werden kann. Alternativ dazu kann das Abutment auch dazu ausgestaltet sein, an einem gesonderten Implantat befestigt zu werden, so dass Implantat und Abutment zweiteilig ausgestaltet sind. Dabei weist das Abutment eine Montagestruktur auf, die vorzugsweise passend zu einer entsprechenden Struktur des Implantats ausgestaltet ist, so dass es effizient damit verbunden werden kann. Die Montagestruktur kann auf geeignete Weise auf bekannte Art ausgestaltet sein. Typischerweise kann ein solches Abutment den Zweck erfüllen, auf einer Seite einen passgenauen Anschluss an ein im Kieferknochen des Patienten eingepflanztes Implantat zu gewährleisten und auf der anderen Seite Mittel bereit zu stellen, an denen die Prothesenkonstruktion sicher befestigt werden kann.

Unter dem Begriff "Prothesenkonstruktion" werden in diesem Zusammenhang verschiedene je nach Einsatz geeignete Konstruktionen verstanden, wie sie beispielsweise als Einzel-, Teil- oder Ganzzahnersatz, Brücke, Krone, Hybrid- oder Vollprothese bekannt sind.

Die Teile der gesamten Prothesen- und Implantateinrichtung, die in einem Einsatz die Gingiva beziehungsweise das Zahnfleisch zum Mundraum hin überragen und somit von außen sichtbar sind, können als Suprastruktur bezeichnet werden. Beispielsweise kann die Suprastruktur die Prothesenkonstruktion, eine eine Halteschale beziehungsweise ein Gehäuse und einen Retentionseinsatz umfassende Verbindungsvorrichtung (Matrize) sowie insbesondere bei der erwähnten zweiteiligen Ausführung des Abutments das Abutment selbst oder zumindest Teile davon wie dessen Einschnappabschnitt (Patrize) umfassen.

Der Begriff "vollständig geschlossen" im Zusammenhang mit dem Kopfende der Abutmentabdeckung bezieht sich darauf, dass die Oberfläche des Kopfendes keine Öffnungen aufweist, die nicht durch Eigenschaften des verwendeten Materials wie beispielsweise durch die Porosität bedingt sind. Insbesondere wird darunter verstanden, dass das Kopfende keine Öffnung zum Einbringen eines Werkzeugs oder eines Retentionsstopfens oder zu einem ähnlichen Zweck aufweist.

Die erfindungsgemäße Abutmentabdeckung erlaubt, dass ein auf beliebige Weise geformtes und mit einer Öffnung versehenes Kopfende beziehungsweise eine Patrize des Abutments einerseits abgedeckt beziehungsweise verschlossen wird und andererseits dass bei aufgesetzter Abutmentabdeckung das Abutment eine okklusale Krümmung aufweist. Dies kann bewirken, dass eine beispielsweise an der Prothesenkonstruktion montierte Matrize beim Aufsetzen auf das Abutment einfach und auf verhältnismäßig sanfte Weise genau positioniert beziehungsweise zentriert werden kann, so dass ein komfortables Einsetzen der Prothesenkonstruktion möglich ist und beispielsweise durch Ecken, Kanten oder ebene Flächen des Abutments beziehungsweise seiner Öffnung verursachte Beschädigungen an der Matrize vermieden werden können. Eine solche Ausgestaltung des Kopfendes ermöglicht, dass das Aufsetzen einer zu dem als Patrize einer Druckknopfverbindung dienenden Einschnappabschnitt passenden Matrize und insbesondere deren Retentionseinsatz verhältnismäßig einfach verläuft. Insbesondere kann über die Krümmung des Kopfendes der auf dem Abutment aufgesetzten Abutmentabdeckung die Matrize präzise eingemittet und positioniert werden, indem die Matrize entlang der Krümmung gleitet bis sie zentriert auf der Patrize liegt, so dass ein komfortables Aufdrücken und Aufschnappen der Matrize auf den Einschnappabschnitt möglich ist.

Auch ermöglicht die erfindungsgemäße Abutmentabdeckung, dass sich das Kopfende des abgedeckten Abutments verhältnismäßig weit in den Mundinnenraum erstreckt. Dadurch kann sich das Abutment weiter vom Zahnfleisch abheben, so dass es sich vor einem Einsetzen der Prothesenkonstruktion verhältnismäßig leicht und eindeutig lokalisieren lässt. Durch eine gleichzeitig angepasste Ausgestaltung anderer Bestandteile der Suprastruktur insbesondere des Retentionseinsatzes kann gleichzeitig verhindert werden, dass die Suprastruktur unzweckmäßig hoch ist.

Zudem ermöglicht die geschlossene Ausgestaltung des Kopfendes eine Verbesserung der Hygiene, da kein Einschluss von Speiseresten oder anderen Verunreinigung in Öffnungen möglich ist.

Die erfindungsgemäße Abutmentabdeckung ermöglicht also, dass die Prothesenkonstruktion verhältnismäßig leicht und effizient über eine Patrize einer Druckknopfverbindung im Mund eines Patienten eingesetzt werden kann und dass eine verhältnismäßig gute Hygiene gewährleistet werden kann.

Vorzugsweise entspricht der konvex gekrümmte Frontabschnitt des Kopfendes der Abutmentabdeckung im Wesentlichen einem Segment einer Kugelfläche. Der Mittelpunkt der Kugelfläche kann dabei auf der Längsachse der Abutmentabdeckung liegen. Damit kann das Kopfende auf verhältnismäßig einfache Weise bevorzugt konvex gekrümmt ausgestaltet sein.

Vorzugsweise weist das Kopfende der Abutmentabdeckung einen Einschnappabschnitt auf, der eine konvex gekrümmte Außenfläche umfasst und der in Richtung der Befestigungsstruktur an den Frontabschnitt des Kopfendes anschließt. Insbesondere kann die Außenfläche des Einschnappabschnitts in radialer Richtung beziehungsweise entlang einer radialen Achse konvex gekrümmt sein. Eine solche Abutmentabdeckung ermöglicht, dass mittels der Abutmentabdeckung eine effiziente lösbare Druckknopfverbindung beziehungsweise ein Teil davon wie insbesondere eine Patrize auf das Abutment aufgesetzt wird, so dass das Abutment selbst keine entsprechenden Mittel aufweisen muss. Dadurch lässt sich das Abutment unabhängig von einer Verbindung mit der Prothesenkonstruktion ausgestalten und die geeigneten Verbindungsmittel beziehungsweise der Einschnappabschnitt beziehungsweise die Patrize können auf das Abutment aufgesetzt werden. Diese Unabhängigkeit kann insbesondere bei wie beispielsweise in der WO 2011/027230 A2 beschriebenen individuellen Abutments vorteilhaft sein. Das Abutment kann dann individuell auf die vorliegende Situation angepasst beispielsweise über ein CAD/CAM-Verfahren hergestellt werden und die Patrize kann mit der Abutmentabdeckung als konfektioniertes Teil aufgesetzt werden. Dabei weist die Abutmentabdeckung vorzugsweise einen in Richtung der Befestigungsstruktur an den Einschnappabschnitt des Kopfendes anschließenden Halsabschnitt auf, wobei die konvex gekrümmte Außenfläche des Einschnappabschnitts den Halsabschnitt von einer Längsachse der Abutmentabdeckung aus nach außen überragt. Dadurch kann der Teil der Abutmentabdeckung vom Einschnappabschnitt bis zum Kopfende eine Patrize einer Druckknopfverbindung der erwähnten Art bilden. Dabei kann unter Einsatz einer geeigneten Verbindungsvorrichtung die Prothesenkonstruktion effizient und bequem mit dem Abutment und somit mit dem Kieferknochen lösbar und sicher verbunden werden.

Vorzugsweise weist ein maximaler senkrecht zur Längsachse der Abutmentabdeckung liegender Querschnitt des Einschnappabschnitts einen Durchmesser von etwa 2.3 mm bis etwa 2.8 mm und insbesondere von etwa 2.5 mm auf. Ein so dimensionierter Einschnappabschnitt ermöglicht eine verhältnismäßig kleine Druckknopfverbindung, was bei vielen Prothesenkonstruktionen beziehungsweise Anwendungen eine erhöhte Flexibilität insbesondere in ästhetisch anspruchsvollen Situationen und einen verbesserten Komfort ermöglichen kann. Zum Vergleich liegen entsprechende Durchmesser herkömmlicher Druckknopfverbindungen in einem Bereich von etwa 3.8 mm bis etwa 4 mm. Gemäß der bevorzugten Dimensionierung des Einschnappabschnitts der Abutmentabdeckung kann der Durchmesser also um etwa 30 % bis etwa 40 % reduziert werden. Insbesondere zusammen mit einem Retentionseinsatz beziehungsweise einer Matrize wie in der WO 2011/027229 A2 beschrieben können trotz der kleineren Dimensionierung des Einschnappabschnitts ausreichende Halte- beziehungsweise Abzugs- beziehungsweise Retentionskräfte gewährleistet werden. Zudem ermöglicht die bevorzugte konvex gekrümmte Ausgestaltung des Kopfendes der Abutmentabdeckung ein einfaches sauberes Aufsetzen der Prothesenkonstruktion auf die Abutmentabdeckung auch bei verhältnismäßig kleinen solchen Einschnappabschnitten.

In einer bevorzugten Ausführung weist die Befestigungsstruktur der Abutmentabdeckung eine im Wesentlichen ringförmige Einrastlippe auf, die sich in Richtung entgegen dem Kopfende beziehungsweise entgegen der Richtung des Kopfendes erstreckt. Die Ringmittelachse kann dabei identisch mit der Längsachse der Abutmentabdeckung sein. Eine solche Einrastlippe ermöglicht, dass die Abutmentabdeckung auf das Abutment aufgeschnappt und mit ihm sicher und effizient verbunden werden kann. Insbesondere kann dazu die Einrastlippe auf geeignete Weise einerseits elastisch genug ausgestaltet sein, dass ein Aufschnappen möglich ist, und andererseits steif genug ausgestaltet sein, dass die Abutmentabdeckung ausreichend fest auf dem Abutment hält. Dabei weist die Einrastlippe vorzugsweise mehrere Lamellenbereiche auf, zwischen denen jeweils eine Ausnehmung angeordnet ist. Auf diese Weise kann die Elastizität beziehungsweise Steife der Einrastlippe effizient vorgegeben sein. Beispielsweise kann durch die Ausgestaltung verhältnismäßig vieler Lamellenebereiche beziehungsweise verhältnismäßig großer Ausnehmungen die Einrastlippe verhältnismäßig elastisch ausgestaltet sein.

Zum Entfernen der Abutmentabdeckung mit einer solchen Einrastlippe weist die Abutmentabdeckung vorzugsweise ein Innengewinde auf, das zentral benachbart zum Kopfende angeordnet ist. Ein solches Innengewinde ermöglicht, dass zum Abnehmen der Abutmentabdeckung vom Abutment eine Gewindestange mit einem korrespondierend zum Innengewinde ausgestalteten Außengewinde beziehungsweise eine Aushebevorrichtung vom Kopfende her eingeschraubt wird. Ab einem bestimmten Punkt liegt dann die Gewindestange am Abutment an und die Abutmentabdeckung wird bei einem Weiterschrauben der Gewindestange vom Abutment weg gezogen. In bestimmten Ausführungsformen kann es dazu auch notwendig sein, das Kopfende der Abutmentabdeckung beziehungsweise Teile davon abzutrennen um das Innengewinde nach außen hin zugänglich zu machen. Dadurch kann die Abutmentabdeckung effizient wieder vom Abutment abgenommen werden.

In einer anderen bevorzugten Ausführung umfasst die Befestigungsstruktur der Abutmentabdeckung einen Schraubzylinder, der ein Außengewinde aufweist und der sich in Richtung entgegen dem Kopfende beziehungsweise in Richtung entgegen des Kopfendes erstreckt. Der Schraubzylinder kann insbesondere dazu ausgestaltet sein, um in ein entsprechendes Innengewinde an der Öffnung des Abutments eingeschraubt zu werden. Damit kann eine sichere, effiziente und lösbare Verbindung der Abutmentabdeckung auf dem Abutment ermöglicht werden.

Vorzugsweise weist die Abutmentabdeckung dabei einen Schlüsselansetzabschnitt auf. Ein solcher Schlüsselansetzabschnitt ermöglicht, dass die Abutmentabdeckung mit einem Werkzeug wie beispielsweise weiter unten detaillierter beschrieben effizient mit dem Abutment verschraubt beziehungsweise von diesem gelöst werden kann. Der Schlüsselansetzabschnitt kann im Wesentlichen als Zylinder ausgestaltet sein. Dabei kann die Mittelachse des Zylinders insbesondere der Längsachse der Abutmentabdeckung entsprechen. Ein senkrecht zur Längsachse der Abutmentabdeckung liegender Querschnitt des Schlüsselansetzabschnitts beziehungsweise des Zylinders kann im Wesentlichen die Form eines Vielecks aufweisen, so dass mehrere im Wesentlichen rechteckige Angriffsflächen an einer Außenfläche des Schlüsselansetzabschnitts beziehungsweise des Zylinders ausgestaltet sind. Die vieleckig geformte Ausgestaltung des senkrecht zur Längsachse des Abutments liegenden Querschnitts des Zylinder und die dadurch gebildeten im Wesentlichen rechteckigen Angriffsflächen ermöglichen, dass die Abutmentabdeckung zum Auf- und Abdrehen beziehungsweise -schrauben von außen her gegriffen werden kann. Insbesondere kann dies durch ein spezifisch angepasstes Schraubwerkzeug erfolgen, wie es weiter unten detaillierter beschrieben ist. Das erwähnte Vieleck kann insbesondere im Wesentlichen die Form eines Vierkants beziehungsweise Quadrats, eines Hexagons oder eines Oktagons aufweisen. In der Ausgestaltung der Abutmentabdeckung mit einem Halsabschnitt wie oben beschrieben kann der Halsabschnitt dem Schlüsselansetzabschnitt beziehungsweise dem Zylinder entsprechen, Indem der Halsabschnitt nach außen hin beziehungsweise im Querschnitt rechtwinklig zur Längsachse weniger mächtig ausgestaltet ist als der Einschnappabschnitt, kann eine Druckknopfverbindung auch mit einer verhältnismäßig kleinen Höhe bereit gestellt werden. Der Halsabschnitt kann dabei sowohl als Verschraubmittel dienen als auch Raum lassen, damit eine Matrize den Einschnappabschnitt umgreifen kann. Insbesondere ermöglicht dies, dass eine zum Einschnappabschnitt der Abutmentabdeckung passende Matrize beziehungsweise ein Retentionseinsatz davon den Einschnappabschnitt umgreifen und somit darauf einschnappen kann.

Vorzugsweise umfasst die Abutmentabdeckung einen zwischen dem Kopfende und der Befestigungsstruktur angeordneten Scheibenabschnitt. Dabei kann die Befestigungsstruktur am Scheibenabschnitt angeordnet sein und sich vom Kopfende weg erstrecken. Ein solcher Scheibenabschnitt kann es ermöglichen, dass in Verwendung der Abutmentabdeckung die Öffnung des Abutments abgedeckt ist und dass gleichzeitig das Kopfende frei auf eine vorgesehene Verbindung mit einer Prothesenkonstruktion angepasst ausgestaltet wird.

Vorzugsweise ist die Abutmentabdeckung aus einem Polyaryletherketon (PAEK) und insbesondere aus einem Polyetheretherketon (PEEK) oder einem Polyetherketonketon (PEKK) hergestellt ist. Solche Materialien können bevorzugte Eigenschaften bezüglich Bioverträglichkeit, Belastbarkeit, Elastizität und Langlebigkeit aufweisen. Zudem können mit solchen Materialien Abutmentabdeckungen verhältnismäßig effizient und kostengünstig hergestellt werden.

Ein weiterer Aspekt der Erfindung betrifft eine Abutmentanordnung, die ein Abutment und eine Abutmentabdeckung wie oben beschrieben umfasst. Das Abutment ist dabei mit einer Montagestruktur ausgebildet, über die das Abutment an einem Kieferknochen, an einem im Kieferknochen eingepflanzten Implantat, an einem Zahnstumpf oder an einem Nachbarzahn befestigbar ist. Weiter weist das Abutment eine Öffnung und eine Befestigungsstrukturaufnahme auf. Die Befestigungsstrukturaufnahme des Abutments steht mit der Befestigungsstruktur der Abutmentabdeckung in Eingriff, wenn die Abutmentabdeckung auf dem Abutment befestigt ist. Die Öffnung des Abutments ist im Wesentlichen vollständig abgedeckt, wenn die Abutmentabdeckung auf dem Abutment befestigt ist. Die erfindungsgemäße Abutmentanordnung ermöglicht eine effiziente Implementierung einer Druckknopfverbindung der beschriebenen Art, mit der sich insbesondere die oben im Zusammenhang mit der Abutmentabdeckung erwähnten Vorteile verwirklichen lassen.

In einer bevorzugten Ausführung der Abutmentanordnung umfasst die Befestigungsstrukturaufnahme des Abutments eine sich entlang des Umfangs der Öffnung erstreckende Nut. Eine solche Befestigungsstrukturaufnahme ermöglicht, dass eine Einrastlippe der Befestigungsstruktur der Abutmentabdeckung in die Nut einrasten kann, so dass die Abutmentabdeckung damit auf dem Abutment befestigt ist. Insbesondere kann eine solche Ausgestaltung ermöglichen, dass die Abutmentabdeckung in der Art einer Klickverbindung effizient und sicher auf dem Abutment eingerastet ist.

In einer anderen bevorzugten Ausführung der Abutmentanordnung umfasst die Befestigungsstrukturaufnahme des Abutments ein sich entlang des Umfangs der Öffnung erstreckendes Innengewinde. Eine solche Befestigungsstrukturaufnahme ermöglicht, dass ein Außengewinde der Befestigungsstruktur der Abutmentabdeckung in das Innengewinde eingreifen kann, so dass die Abutmentabdeckung damit auf dem Abutment befestigt ist. Insbesondere kann eine solche Ausgestaltung ermöglichen, dass die Abutmentabdeckung effizient und sicher auf das Abutment auf- und abgeschraubt werden kann.

Ein anderer weiterer Aspekt der Erfindung betrifft ein Verfahren zur Verbindung einer dentalen Prothesenkonstruktion mit einem Kieferknochen unter Verwendung einer Abutmentanordnung wie oben beschrieben. Das Verfahren umfasst die folgenden Schritte: Befestigen des Abutments über die Montagestruktur des Abutments am Kieferknochen, an einem im Kieferknochen eingepflanzten Implantat, an einem Zahnstumpf oder an einem Nachbarzahn; Befestigen der Abutmentabdeckung auf dem Abutment; festes Montieren einer Halteschale an der Prothesenkonstruktion; axiales Eindrücken eines Retentionseinsatzes in die Halteschale bis der Retentionseinsatz in der Halteschale angeordnet ist; Anordnen der Prothesenkonstruktion am Abutment, so dass das Kopfende der Abutmentabdeckung am Retentionseinsatz anliegt; und Aufdrücken der Prothesenkonstruktion auf die Abutmentabdeckung und das Abutment, so dass der Retentionseinsatz axial über einen Einschnappabschnitt der Abutmentabdeckung beziehungsweise des Abutments gedrückt wird und darauf einschnappt. Vorzugsweise werden in dem Verfahren ein Retentionseinsatz und eine Halteschale wie in der WO 2011/027229 A2 beschrieben verwendet. Mit einem solchen Verfahren können beispielsweise die oben im Zusammenhang mit der Abutmentanordnung beziehungsweise der Abutmentabdeckung beschriebenen Vorteile effizient implementiert werden.

Ein weiterer Aspekt der Offenbarung betrifft ein Schraubwerkzeug zum Schrauben einer Abutmentabdeckung mit einem ein Außengewinde aufweisenden Schraubzylinder und einem Schlüsselansetzabschnitt wie oben beschrieben. Das Schraubwerkzeug umfasst einen Drehgriff beispielsweise als Ratschenanschluss, eine Fassung und einen Angriffsabschnitt, wobei der Angriffsabschnitt korrespondierend Schlüsselansetzabschnitt der Abutmentabdeckung ausgestaltet ist und die Fassung den Drehgriff und den Angriffsabschnitt drehfest miteinander verbindet, so dass eine Drehachse des Drehgriffs im Wesentlichen auf einer Längsachse der Abutmentabdeckung liegt, wenn der Angriffabschnitt an den Angriffsflächen des Körperabschnitts des Abutments anliegt. Dabei weist die Fassung des Schraubwerkzeugs vorzugsweise eine Aufnahme mit einer im Wesentlichen korrespondierend zu einer Außenfläche des Schlüsselansetzabschnitts der Abutmentabdeckung ausgestalteten Innenfläche auf. Der Drehgriff kann dabei so ausgestaltet sein, dass er einerseits von Hand gegriffen und gedreht werden kann und andererseits als Ratschenanschluss dient, an dem ein Drehmomentschüssel beziehungsweise eine Ratsche angeschlossen werden kann. Ein solches Schraubwerkzeug ermöglicht, dass der Kopf des Abutments und insbesondere der Einschnappabschnitt und der Frontabschnitt der Abutmentabdeckung unabhängig von einem vorgesehenen Schraubvorgang ausgestaltet werden können. Dies erlaubt, dass das Kopfende angepasst für ein möglichst effizientes, bequemes und hygienisches Montieren einer beispielsweise mit der Prothesenkonstruktion verbundenen Matrize geformt ist.

### Kurze Beschreibung der Zeichnungen

Im Folgenden wird die Erfindung unter Bezugnahme auf die beigefügten Zeichnungen anhand von Ausführungsbeispielen detaillierter beschrieben. Es zeigen:
Fig. 1 eine schematische perspektivische Ansicht eines ersten Ausführungsbeispiels einer erfindungsgemäßen Abutmentanordnung mit einem ersten Ausführungsbeispiel einer erfindungsgemäßen Abutmentabdeckung und einem ersten Ausführungsbeispiel eines Abutments;
Fig. 2 eine schematische Querschnittansicht der Abutmentanordnung von Fig. 1 in Anwendung;
Fig. 3 eine schematische Querschnittansicht der Abutmentanordnung von Fig. 1 bei der ein Manipulierinstrument zur Entnahme der Abutmentabdeckung vom Abutment angesetzt ist;
Fig. 4 eine schematische perspektivische Ansicht eines zweiten Ausführungsbeispiels einer erfindungsgemäßen Abutmentanordnung mit einem zweiten Ausführungsbeispiel einer erfindungsgemäßen Abutmentabdeckung und einem zweiten Ausführungsbeispiel eines Abutments;
Fig. 5 eine schematische Querschnittansicht der Abutmentanordnung von Fig. 4 in Anwendung; und
Fig. 6 eine schematische perspektivische Ansicht eines Ausführungsbeispiels eines Schraubwerkzeugs für die Abutmentabdeckung von Fig. 4.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach außen" bezeichnen Richtungen hin zum oder weg vom geometrischen Mittelpunkt der gezeigten Gegenstände sowie benannter Teile davon. Die Terminologie umfasst die oben ausdrücklich erwähnten Wörter, Ableitungen von denselben und Wörter ähnlicher Bedeutung.

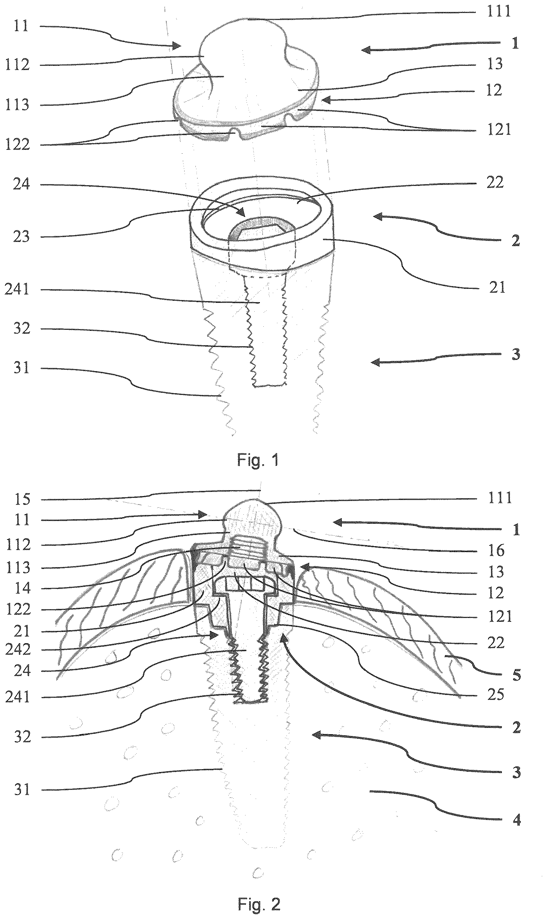

Fig. 1 zeigt ein erstes Ausführungsbeispiel einer Abutmentanordnung, die ein erstes Ausführungsbeispiel einer Abutmentabdeckung 1 und ein erstes Ausführungsbeispiel eines Abutments 2 umfasst. Die Abutmentabdeckung 1 weist ein okklusales Kopfende 11, eine dem Kopfende 11 entgegengesetzte Befestigungsstruktur 12 und einen Scheibenabschnitt 13 auf. Der Scheibenabschnitt 13 ist leicht konische kreisscheibenförmig ausgestaltet und verbindet das Kopfende 11 mit der Befestigungsstruktur 12. Das Kopfende 11 ist als Patrize einer Druckknopfverbindung mit einem Halsabschnitt 113 und einem Einschnappabschnitt 112 ausgestaltet, wobei der Einschnappabschnitt 112 den Halsabschnitt 113 nach außen hin überragt. Oberhalb des Einschnappabschnitts 112 beziehungsweise der Befestigungsstruktur 12 abgewandt schließt ein kugelsegmentoberflächenförmiger, konvex gekrümmter Frontabschnitt 111 an den Einschnappabschnitt 112 an. Das Kopfende 11 ist in Bezug auf eine zentrale Rotationsachse rotationssymmetrisch ausgestaltet. Die Befestigungsstruktur 12 umfasst eine im Wesentlichen ringförmige Einrastlippe, die aus mehreren Lamellenabschnitten 121 und dazwischen angeordneten Ausnehmungen 122 besteht. Die Einrastlippe erstreckt sich vom Kopfende 11 weg in Richtung des Abutments 2 und ist im Querschnitt leicht gebogen geformt.

Das Abutment 2 weist einen Gingivahöhenabschnitt 21, eine Öffnung 22, eine Befestigungsstrukturaufnahme mit einer sich entlang des Umfangs der Öffnung 22 erstreckenden Nut 23 und eine Montagestruktur 24 auf. Die Höhe des Gingivahöhenabschnitts kann in einem Bereich von etwa 0.5 mm bis etwa 8 mm, vorzugsweise in einem Bereich von etwa 1 mm bis 6 mm und insbesondere in einem Bereich von 1.5 mm bis 5.5 mm liegen. Die Montagestruktur 24 umfasst eine Implantatschraube 241 mit einem Außengewinde, die in eine Schraubenaufnahme 32 eines Implantats 3 eingeschraubt ist. Damit ist das Abutment 2 auf dem Implantat 3 befestigt. Das Implantat 3 weist weiter einen Implantatkörper mit einem Außengewinde 31 auf, der im Wesentlichen als konischer Zylinder ausgestaltet ist. Die Implantatschraube 241 weist einen Schraubenkopf mit einem Innensechskantprofil auf. Zum Schrauben der Implantatschraube kann ein geeignetes Werkzeug auf bekannte Weise durch die Öffnung 22 des Abutments 2 hindurch in das Innensechskantprofil der Impfantatschraube 241 greifen.

Der Gingivahöhenabschnitt 21 des Abutments 2 ist auf die individuellen Gegebenheiten einer vorgesehenen Anwendung des Abutments 2 angepasst ausgestaltet. Dabei kann das Abutment vorzugsweise wie in der WO 2011/027230 A2 beschrieben unter Verwendung einer CAD/CAM-Technologie individuell hergestellt sein, wobei das Abutment nicht gekrümmt ausgestaltet ist sondern geneigt. Insbesondere ist dazu der Gingivahöhenabschnitt 21 auf einer Seite, in Fig. 1 auf seiner linken Seite, weniger mächtig ausgestaltet als auf einer gegenüberliegenden Seite, in Fig. 1 auf seiner rechten Seite. Dadurch ist ein oberer Rand der Öffnung 22 sowie auch die Nut 23 in Bezug auf eine Oberfläche des Implantats 3 beziehungsweise in Bezug auf eine Implantatachse geneigt. Der Gingivahöhenabschnitt 21 des Abutments 2 ist so geformt, dass er ab Oberfläche des Implantats 3 beziehungsweise ab Implantatplattform einen identischen Durchmesser bis über den Gingivasaum aufweist.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen erwähnt, die in der zugehörigen Figur nicht enthalten sind, so wird auf die vorangehenden Figuren verwiesen.

In der Fig. 2 ist die Abutmentanordnung in einem Querschnitt gezeigt, wobei die Abutmentabdeckung 1 auf das Abutment 2 aufgesetzt ist und wobei das Implantat 3 in einen Kieferknochen 4 eines Patienten eingepflanzt ist. Wie in Fig. 2 ersichtlich, weist die Abutmentabdeckung 1 eine Längsachse 15 auf, die sich zentral von der Befestigungsstruktur 12 zum Kopfende 11 erstreckt und die der Rotationsachse des Kopfendes 11 entspricht. Ausgehend von der Längsachse 15 erstrecken sich radiale Achsen 16 rechtwinklig zur Längsachse 15, wobei in Fig. 2 beispielhaft eine davon dargestellt ist. Auf Grund der individuellen Ausgestaltung des Abutments 2 und insbesondere seines Gingivahöhenabschnitts 21 liegt die Längsachse 15 der Abutmentabdeckung 1 angewinkelt beziehungsweise in einem spitzen Winkel zu einer Implantatachse.

In der in der Fig. 2 gezeigten Position ist die Abutmentabdeckung 1 auf das Abutment 2 aufgedrückt beziehungsweise aufgeklickt. Die Öffnung 22 des Abutments 2 ist dadurch vollständig von der Abutmentabdeckung 1 abgedeckt und geschlossen. Dabei greifen die Lamellenabschnitte 121 der Einrastlippe der Befestigungsstruktur 12 in die Nut 23 des Abutments 2 ein, so dass die Abutmentabdeckung 1 insbesondere in Richtung der Längsachse der Abutmentabdeckung 1 mit ausreichender Kraft auf dem Abutment 2 gehalten wird. Die Nut 23 weist im Querschnitt eine dem Querschnitt der Lamellenabschnitte 121 entsprechende leicht gebogene Form auf.

Im Innern der Abutmentabdeckung 1 ist eine Ausnehmung 14 mit einem Innengewinde ausgestaltet, die sich von seiner der Befestigungsstruktur 12 zugewandten Seite her durch den Scheibenabschnitt 13 hindurch bis in den Halsabschnitt 113 des Kopfendes 11 erstreckt. Angrenzend an den Kopf der Implantatschraube 241 weist das Abutment 2 einen Schraubenkopfanschlag 242 auf. Zudem umfasst das Abutment 2 eine Implantatkontaktfläche 25. Der Gingivahöhenabschnitt 21 des Abutments 2 ist angepasst auf eine vorliegende Anwendungssituation geformt und weist eine variable auf die Höhe einer umliegenden Gingiva 5 angepasste Mächtigkeit.

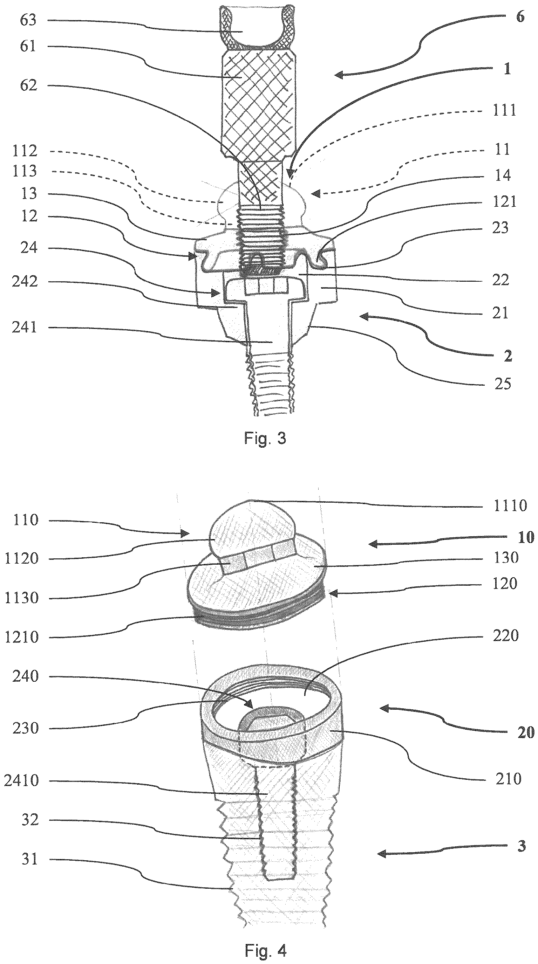

Fig. 3 zeigt die Abutmentanordnung wobei das Kopfende 11 der Abutmentabdeckung 1 abgetrennt ist (in Fig. gestrichelt dargestellt), so dass die Ausnehmung 14 nach oben beziehungsweise in Richtung einer Mundhöhle geöffnet ist. In die Ausnehmung 14 ist eine Gewindestange 62 eines Manipulierinstruments 6 eingeschraubt. Das Manipulierinstrument 6 weist weiter einen länglichen zylindrischen Griffkörper 61 und eine Patrizenaufsetzhilfe 63 auf.

In bestimmungsgemäßer Verwendung der Abutmentanordnung wird das Abutment 2 über die Montagestruktur 24 am im Kieferknochen 4 auf bekannte Weise eingepflanzten Implantat 3 befestigt. Dazu wird das Abutment 2 in einer vorgegebenen Position auf dem Implantat 3 angeordnet. Die Implantatschraube 241 wird durch die Öffnung 22 des Abutments 2 hindurch mit einem geeigneten Werkzeug in die Schraubenaufnahme 32 des Implantats 3 eingeschraubt. Dabei wirkt eine Kraft vom Außengewinde der Implantatschraube 241 auf das Innengewinde der Schraubenaufnahme 32 und vom Kopf der Implantatschraube 241 auf den Schraubenkopfanschlag 242 der Montagestruktur 24, so dass das Abutment 2 an das Implantat 3 angedrückt wird. Dabei weist das Abutment 2 die gestufte Implantatkontaktfläche 25 auf und das Implantat 3 eine korrespondierende Oberfläche. Diese gestuften Kontaktflächen sowie das Gewinde und der Schraubenkopf bewirken eine verteilte gleichmäßige Kraftübertragung von Abutment 2 auf Implantat 3 und umgekehrt.

Nach der Befestigung des Abutments 2 auf dem Implantat 3 wird die Abutmentabdeckung 1 auf das Abutment 2 aufgesetzt. Dazu kann das Manipulierinstrument 6 verwendet werden, in dem das Kopfende 11 der Abutmentabdeckung 1 in der Patrizenaufsetzhilfe 63 angeordnet wird und so vom Manipulierinstrument 6 gehalten wird. Mit Hilfe des Manipulierinstruments 6 wird dann die Abutmentabdeckung 1 auf das Abutment 2 so aufgedrückt, dass die Lamellenabschnitte 121 in die Nut 23 einschnappen. Kurzzeitig werden dabei die Lamellenabschnitte 121 der Befestigungsstruktur 12 leicht elastisch nach innen deformiert. Das Einschnappen ist über ein Klickgeräusch akustisch wahrnehmbar. In dieser Position ist die Abutmentabdeckung 1 über die in die Nut 23 eingreifenden Lamellenabschnitte 121 ausreichend fest mit dem Abutment 2 verbunden und die Abutmentanordnung ist für die Verbindung mit einer dentalen Prothesenkonstruktion vorbereitet.

Zur Verbindung der Prothesenkonstruktion kann wie beilspielsweise in der WO 2011/027229 A2 beschrieben eine Halteschale einer Matrize fest an der Prothesenkonstruktion montiert werden beispielsweise mittels Eingießen in einen Prothesenkunststoff. Danach kann ein Retentionseinsatz der Matrize in die Halteschale axial eingeführt werden, bis der Retentionseinsatz in der Halteschale angeordnet ist. Die Prothesenkonstruktion kann dann am Abutment 2 angeordnet werden, so dass das Kopfende der Abutmentabdeckung 1 am Retentionseinsatz anliegt. Schließlich kann die Prothesenkonstruktion auf die Abutmentabdeckung 1 und das Abutment 2 aufgedrückt werden, so dass der Retentionseinsatz axial über den Einschnappabschnitt 112 der Abutmentabdeckung 1 beziehungsweise des Abutments 2 gedrückt wird und darauf einschnappt.

Auf diese Weise kann die Abutmentanordnung bevorzugt zur Verbindung der Prothesenkonstruktion mit dem Kieferknochen, 4 verwendet werden.

Zum Entfernen der Abutmentabdeckung 1 vom Abutment 2 kann das Kopfende 11 der Abutmentabdeckung 1 entfernt beispielsweise abgeschnitten werden. Dadurch wird das Innengewinde 14 der Abutmentabdeckung 1 von der Mundhöhle her zugänglich und die Gewindestange 62 des Manipulierinstruments 6 kann eingeschraubt werden. An einem gewissen Drehpunkt liegt dann die Gewindestange 62 am Abutment 2 an. Indem die Gewindestange 62 weiter geschraubt wird, wirkt eine Zugkraft auf die Abutmentabdeckung 1 die genügend groß ist, um die Lamellenabschnitte 121 der Einrastlippe aus der Nut 23 zu ziehen und damit die Abutmentabdeckung 1 vom Abutment 2 zu entfernen.

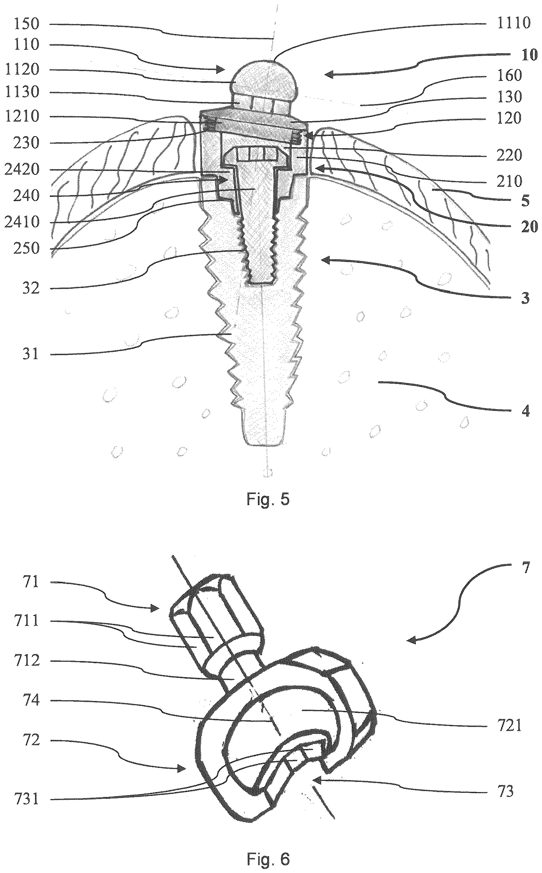

Fig. 4 und Fig. 5 zeigen ein zweites Ausführungsbeispiel einer Abutmentanordnung, die ein zweites Ausführungsbeispiel einer Abutmentabdeckung 10 und ein zweites Ausführungsbeispiel eines Abutments 20 umfasst. Das in Fig. 4 und Fig. 5 gezeigte Implantat 3 entspricht dem Implantat 3 der vorangehenden Figuren. Die Abutmentabdeckung 10 entspricht weitgehend der Abutmentabdeckung 1 der vorangehenden Figuren, wobei sie entsprechend ein Kopfende 110 mit einem Einschnappabschnitt 1120 und einem Frontabschnitt 1110, einen Scheibenabschnitt 130, eine Längsachse 150 und radiale Achsen 160 umfasst. Das Abutment 20 entspricht weitgehend dem Abutment der vorangehenden Figuren, wobei es entsprechend einen Gingivahöhenabschnitt 210, eine Öffnung 220, eine Montagestruktur 240 mit einer Implantatschraube 2410 und einem Schraubenkopfanschlag 2420 sowie eine Implantatkontaktfläche 250 umfasst.

Die Abutmentanordnung von Fig. 4 und Fig. 5 unterscheidet sich von der Abutmentanordnung der vorangehenden Figuren insbesondere dadurch, dass die Abutmentabdeckung 10 eine dem Kopfende 110 entgegengesetzte Befestigungsstruktur 120 mit einem ein Außengewinde umfassenden Schraubzylinder 1210 und einen Halsabschnitt 1130 mit einem hexagonalen Querschnitt aufweist sowie dass das Abutment 20 eine Befestigungsstrukturaufnahme mit einem sich entlang des Umfangs der Öffnung 220 erstreckenden Innengewinde 230 aufweist.

Zum Befestigen der Abutmentabdeckung 10 auf dem Abutment 20 wird die Implantatabdeckung 10 so auf dem Abutment 20 angeordnet, dass der Schraubzylinder 1210 der Befestigungsstruktur 120 an der Öffnung 220 des Abutments 20 anliegt. Die Abutmentabdeckung 10 wird dann beispielsweise mittels eines wie unten beschriebenen Schraubwerkzeugs auf das Abutment 20 geschraubt, wobei das Außengewinde des Schraubzylinders 1210 in das Innengewinde 230 des Abutments 20 greift. Dabei dient der hexagonale Querschnitt des Halsabschnitts 1130 des Kopfendes 110 der Abutmentabdeckung 10 dazu, dass rechteckige Angriffsflächen am Halsabschnitt 1130 ausgestaltet sind, an denen das Schraubwerkzeug ansetzen kann.

Fig. 6 zeig ein einteiliges Schraubwerkzeug 7 zum Schrauben der Abutmentabdeckung 10, wie sie in den Fig. 4 und 5 beschrieben ist. Das Schraubwerkzeug 7 umfasst einen Drehgriff 71, eine Fassung 72 und einen Angriffsabschnitt 73. Der Drehgriff 71 umfasst einen hexagonzylindrischen Halteabschnitt und einen kreiszylindrischen Halsabschnitt 712, wobei der Halteabschnitt den Halsabschnitt 712 von einer Drehachse 74 des Werkzeugs 7 aus nach außen überragt. Die Drehachse 74 liegt dabei auf einer Mittelachse des Halteabschnitts und des Halsabschnitts 712 des Drehgriffs 71. Der Halteabschnitt weist an seiner Mantelfläche sechs Halteflächen 711 auf, über die der Drehgriff 71 und somit das ganze Schraubwerkzeug 7 bequem von einer Hand eines Benutzers zum Schrauben gehalten werden kann oder über die ein Drehmomentschlüssel, wie er beispielsweise als Ratsche bekannt ist, angeschlossen werden kann. Der Halsabschnitt 712 verbindet den Drehgriff 71 drehfest mit der Fassung 72.

Die Fassung 72 ist als Teil eines Hohlkörpers ausgestaltet, dessen Innenraum 721 vollständig geöffnet und somit von außen zugänglich ist. An seinem unteren Ende geht die Fassung 72 in den Angriffsabschnitt 73 über, wobei der Angriffsabschnitt 73 einen Boden des Teils des Hohlkörpers der Fassung 72 bildet. Dieser Boden beziehungsweise der Angriffsabschnitt 73 weist einen in eine Richtung seitlich geöffneten Durchbruch auf, der ein Hexagon ähnliches Profil aufweist. Dabei bilden die Innenflächen des Profils vier Angriffsflächen 731. Die Angriffsflächen 731 stehen jeweils in einem 60° Winkel zu den zugehörigen benachbarten Angriffsflächen 731. Die beiden Angriffsflächen 731, die in die seitlich Öffnung des Durchbruchs des Angriffsabschnitts 73 münden sind jeweils etwas verlängert ausgestaltet.

In Verwendung wird das Schraubwerkzeug 7 so seitlich auf die Abutmentabdeckung 10 aufgeschoben, dass der Halsabschnitt 1130 durch die seitliche Öffnung des Angriffsabschnitts 73 eingeführt ist. Der Innenraum 721 weist eine Innenfläche auf, die dazu ausgestaltet ist, den Einschnappabschnitt 1120 und den Frontabschnitt 1110 des Kopfendes 110 der Abutmentabdeckung 10 von einer Seite her zu umschließen. Er ist im Wesentlichen korrespondierend zu den Außenflächen dieser Teile ausgestaltet, wobei die Innenfläche des Innenraums 721 der Fassung 72 nicht vollständig an diesen Außenflächen anliegt, sondern zumindest teilweise beabstandet davon ist. Zum Schrauben der Abutmentabdeckung 10 greift der Benutzer mit einer Hand oder mit einem Drehmomentschlüssel den Drehgriff 71 des Schraubwerkzeugs 7 und bringt eine Dreh- beziehungsweise Rotationskraft um die Drehachse 74 des Schraubwerkzeugs 7 daran an. Der Drehgriff 71 überträgt diese Drehkraft über die Fassung 72 auf den Angriffsabschnitt 73 des Werkzeugs 7. Der Angriffsabschnitt 73 wiederum überträgt die Drehkraft via seine Angriffsflächen 731 auf den Halsabschnitt 1130 der Abutmentabdeckung 10 und die Abutmentabdeckung 10 wird dadurch um ihre Längsachse 150 gedreht beziehungsweise geschraubt. Der Angriffsabschnitt 73 des Schraubwerkzeugs 7 wirkt dabei ähnlich einem bekannten Gabel- oder Maulschlüssel, mit dem man Sechskant-Schraubenköpfe beziehungsweise -Muttern drehen kann.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschließlich die in den Ansprüchen beziehungsweise in den Ausführungsbeispielen beschriebenen Merkmale umfasst sowie auch solche, die zusätzliche andere Merkmale umfassen.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen.

In den Figuren verwendete Bezugszeichen
- 1: Abutmentabdeckung;
- 11: Kopfende;
- 111: Frontabschnitt;
- 112: Einschnappabschnitt;
- 113: Halsabschnitt;
- 12: Befestigungsstruktur;
- 121: Lamellenabschnitt;
- 122: Ausnehmung;
- 13: Scheibenabschnitt;
- 14: Aufnahme;
- 15: Längsachse;
- 16: radiale Achse;
- 2: Abutment;
- 21: Gingivahöhenabschnitt;
- 22: Öffnung;
- 23: Nut;
- 24: Montagestruktur;
- 241: Implantatschraube;
- 242: Schraubenkopfanschlag;
- 25: Implantatkontaktfläche;
- 3: Implantat;
- 31: Außengewinde;
- 32: Schraubenaufnahme;
- 4: Kieferknochen;
- 5: Gingiva;
- 6: Manipulierinstrument;
- 61: Griffkörper;
- 62: Gewindestange;
- 63: Patrizenaufsetzhilfe;
- 7: Schraubwerkzeug;
- 71: Drehgriff;
- 711: Halteflächen;
- 712: Halsabschnitt;
- 72: Fassung;
- 721: Innenraum;
- 73: Angriffsabschnitt;
- 731: Angriffsflächen;
- 74: Drehachse;
- 10: Abutmentabdeckung;
- 110: Kopfende;
- 1110: Frontabschnitt;
- 1120: Einschnappabschnitt;
- 1130: Halsabschnitt;
- 120: Befestig ungsstruktur;
- 1210: Schraubzylinder;
- 130: Scheibenabschnitt;
- 150: Längsachse;
- 160: radiale Achse;
- 20: Abutment;
- 210: Gingivahöhenabschnitt;
- 220: Öffnung;
- 230: Innengewinde;
- 240: Montagestruktur;
- 2410: Implantatschraube;
- 2420: Schraubenkopfanschlag; und
- 250: Abutmentkontaktfläche;

## Patentansprüche

1. Abutmentabdeckung (1; 10) für ein Abutment (2; 20) zur Verbindung
einer dentalen Prothesenkonstruktion mit einem Kieferknochen, umfassend:
ein Kopfende (11; 110) und
eine dem Kopfende (11; 110) entgegengesetzte Befestigungsstruktur (12; 120),
wobei die Befestigungsstruktur (12; 120) dazu ausgestaltet ist, dass die Abutmentabdeckung (1; 10) an einer Öffnung (22; 220) des Abutments (2; 20) auf dem Abutment (2; 20) befestigbar ist, so dass die Öffnung (22; 220) des Abutments (2; 20) im Wesentlichen vollständig von der Abutmentabdeckung (1; 10) abgedeckt ist,
wobei das Kopfende (11; 110) einen der Befestigungsstruktur (12; 120) abgewandten konvex gekrümmten Frontabschnitt (111; 1110) aufweist, und
wobei das Kopfende (11; 110) im Wesentlichen vollständig geschlossen ausgestaltet ist.

2. Abutmentabdeckung (1; 10) nach Anspruch 1, bei der der konvex
gekrümmte Frontabschnitt (111; 1110) des Kopfendes (11; 110) im Wesentlichen einem Segment einer Kugelfläche entspricht.

3. Abutmentabdeckung (1; 10) nach Anspruch 1 oder 2, bei der das
Kopfende (11; 110) einen Einschnappabschnitt (112; 1120) aufweist, der eine konvex gekrümmte Außenfläche umfasst und der in Richtung der Befestigungsstruktur (12; 120) an den Frontabschnitt (111; 1110) des Kopfendes (11; 110) anschließt.

4. Abutmentabdeckung (1; 10) nach Anspruch 3, die einen in Richtung
der Befestigungsstruktur (12; 120) an den Einschnappabschnitt (112; 1120) des Kopfendes (11; 110) anschließenden Halsabschnitt (113; 1130) aufweist, wobei die konvex gekrümmte Außenfläche des Einschnappabschnitts (112; 1120) den Halsabschnitt (113; 1130) von einer Längsachse der Abutmentabdeckung (1; 10) aus nach außen überragt.

5. Abutmentabdeckung (1; 10) nach einem der vorangehenden
Ansprüche, bei der die Befestigungsstruktur (12; 120) eine im Wesentlichen ringförmige Einrastlippe (121, 122) aufweist, die sich in Richtung entgegen dem Kopfende (11; 110) erstreckt.

6. Abutmentabdeckung (1; 10) nach Anspruch 5, bei der die Einrastlippe
(121, 122) mehrere Lamellenbereiche (121) aufweist, zwischen denen jeweils eine Ausnehmung (122) angeordnet ist.

7. Abutmentabdeckung (1; 10) nach Anspruch 5 oder 6, die ein
Innengewinde (14) aufweist, das zentral benachbart zum Kopfende (11; 110) angeordnet ist.

8. : Abutmentabdeckung (1; 10) nach einem der Ansprüche 1 bis 4, bei der
die Befestigungsstruktur (12; 120) einen Schraubzylinder (1210) umfasst, der ein Außengewinde aufweist und der sich in Richtung entgegen dem Kopfende (11; 110) erstreckt.

9. Abutmentabdeckung (1; 10) nach Anspruch 8, die einen
Schlüsselansetzabschnitt (1130) aufweist.

10. Abutmentabdeckung (1; 10) nach einem der vorangehenden
Ansprüche, die einen zwischen dem Kopfende (11; 110) und der Befestigungsstruktur (12; 120) angeordneten Scheibenabschnitt (13; 130) umfasst.

11. Abutmentabdeckung (1; 10) nach einem der vorangehenden
Ansprüche, die aus einem Polyaryletherketon und insbesondere aus einem Polyetheretherketon oder einem Polyetherketonketon hergestellt ist.

12. Abutmentanordnung, die ein Abutment (2; 20) und eine
Abutmentabdeckung (1; 10) nach einem der vorangehenden Ansprüche umfasst, wobei
das Abutment (2; 20) eine Montagestruktur (24; 240) aufweist, über die das Abutment (2; 20) an einem Kieferknochen (4), an einem im Kieferknochen (4) eingepflanzten Implantat (3), an einem Zahnstumpf oder an einem Nachbarzahn befestigbar ist;
das Abutment (2; 20) eine Öffnung (22; 220) und eine Befestigungsstrukturaufnahme (23; 230) aufweist;
die Befestigungsstrukturaufnahme (23; 230) des Abutments (2; 20) mit der Befestigungsstruktur (12; 120) der Abutmentabdeckung (1; 10) in Eingriff steht, wenn die Abutmentabdeckung (1; 10) auf dem Abutment (2; 20) befestigt ist; und
die Öffnung (22; 220) des Abutments (2; 20) im Wesentlichen vollständig abgedeckt ist, wenn die Abutmentabdeckung (1; 10) auf dem Abutment (2; 20) befestigt ist.

13. Abutmentanordnung nach Anspruch 12, wobei die
Befestigungsstrukturaufnahme (23; 230) des Abutments (2; 20) eine sich entlang des Umfangs der Öffnung (22; 220) erstreckende Nut (23) umfasst.

14. Abutmentanordnung nach Anspruch 12, wobei die
Befestigungsstrukturaufnahme (23; 230) des Abutments (2; 20) ein sich entlang des Umfangs der Öffnung (22; 220) erstreckendes Innengewinde (230) umfasst.

15. Verfahren zur Verbindung einer dentalen Prothesenkonstruktion mit
einem Kieferknochen (4) unter Verwendung einer Abutmentanordnung gemäß einem der Ansprüche 12 bis 14, umfassend:
Befestigen des Abutments (2; 20) über die Montagestruktur (24; 240) des Abutments (2; 20) am Kieferknochen (4), an einem im Kieferknochen (4) eingepflanzten Implantat (3), an einem Zahnstumpf oder an einem Nachbarzahn;
Befestigen der Abutmentabdeckung (1; 10) auf dem Abutment (2; 20);
festes Montieren einer Halteschale an der Prothesenkonstruktion;
axiales Eindrücken eines Retentionseinsatzes in die Halteschale bis der Retentionseinsatz in der Halteschale angeordnet ist;
Anordnen der Prothesenkonstruktion am Abutment (2; 20), so dass das Kopfende (11; 110) der Abutmentabdeckung (1; 10) am Retentionseinsatz anliegt; und
Aufdrücken der Prothesenkonstruktion auf die Abutmentabdeckung (1; 10) und das Abutment (2; 20), so dass der Retentionseinsatz axial über einen Einschnappabschnitt (112; 1120) der Abutmentabdeckung (1; 10) beziehungsweise des Abutments (2; 20) gedrückt wird und darauf einschnappt.
